# EUROPEAN PATENT APPLICATION

(11) **EP 3 671 676 A1**
(43) Date of publication of application: **24.06.2020**
(21) Application number: 19214898.9
(22) Date of filing: 10.12.2019
(51) Int. Cl.: G07F 7/06, B65F 1/00, G06Q 10/00

(54) **STATION FOR THE SEPARATE COLLECTION OF WASTE**

(30) Priority: 21.12.2018 IT 201800005107 U
(71) Applicant: HERA S.p.A., 40127 Bologna (IT)
(72) Inventor: PIRACCINI, Enrico, 47023 CESENA FC (IT); ALLEGRA, Simone, 47521 CESENA FC (IT); LELLI, Gabriele, 48018 FAENZA RA (IT); NICOLINO, Walter, 10100 TORINO (IT); FABBRI, Ilaria, 41013 CASTELFRANCO EMILIA MO (IT)
(74) Representative: Modiano, Micaela Nadia

(57) **Abstract**

A station for the separate collection of waste (A), which comprises at least: a container (2) provided with doors (3) which are usually maintained in the closed configuration of respective mutually independent inner compartments (4) which are intended for the separate collection of waste (A); actuators (6) for the automatic movement of respective doors (3) from the closed configuration to a temporary open configuration, for free access to the corresponding compartment (4); sensors for measuring the weight of the waste (A) that is progressively disposed in each compartment (4); user recognition means, which are configured to recognize the user (B) intending to dispose waste (A) in at least one compartment (4); an electronic control and management unit, which is configured to receive access requests to at least one compartment (4) and to activate the respective actuator (6), following the successful recognition of a user (B) by the above means.

## Description

The present invention relates to a station for the separate collection of waste.

Nowadays, the issue of collection and management of waste is increasingly often the focus of interest of public opinion, in that it is the crux of a multiplicity of very relevant problems and challenges which are of growing importance for the wider community.

A major topic among these is the correct destination of the waste, which has seen a considerable development of separate waste collection services, which put citizens in a position to separate their waste, directing each type toward the best-suited treatment for disposal or recovery.

To this end, municipal authorities have therefore implemented various different strategies in order to facilitate the correct behavior of citizens, which range from placing containers in public areas, such as wheeled bins and bottle banks, which are designed for a single type of waste, to supplying special collection bins for domestic use, and drawing up schedules for different vehicles to visit the area on set days to collect different categories of waste.

With reference to the containers distributed on the territory (be they wheeled bins or another kind), it is possible to identify some drawbacks that recently, in light of the growing attention toward these issues, have been found to be increasingly unwelcome.

First of all, it must be noted that the municipal authorities send vehicles to empty the containers placed throughout the territory with predefined regularity, based on statistical calculations and theoretical average values of the filling of the containers by the users.

Such an arrangement is often found to be inadequate: in those weeks when the users dispose low amounts of waste, the vehicles make trips empty, or in any case they make more trips than necessary (with unnecessary costs). The opposite condition is even more unwelcome: when in fact the waste disposed is more than expected, some users will be forced or tempted to abandon the waste outside the full container, with evident attendant problems.

Moreover, theoretical values are also what drive the disposal systems, which are activated downstream of the collection activities and which receive the waste from the aforementioned vehicles: again, therefore, the management of masses of waste that differ from what was expected leads to considerable problems.

It is even more important to note that the disposal of waste in wheeled bins, tanks and other conventional containers is often found to be rather inconvenient, owing to the large dimensions of the containers themselves and of the weight of the door that each user has to lift in order to gain access to the inner collection compartment. Moreover, such doors are often situated at a considerable height from the ground (for example on the top or in any case in the upper part of the containers, which have large dimensions), making them even more complicated to move.

While such drawbacks might on balance appear to be minor problems for the average user (although not always), they represent obstacles that are insurmountable, or in any case highly unwelcome and now unacceptable, for users with motor disabilities or disabilities of other kinds, who must evidently be assured of the possibility to freely use such services.

Besides, such need is part of the wider issue of the urban accessibility of services and of their inclusiveness (or inclusion), a term used to identify the extension of the availability and use of structures and services to every citizen or user, independently of the presence of any limiting factors.

The aim of the present invention is to solve the above mentioned problems, by providing a station that offers practical methods of separate collection and management of waste.

Within this aim, an object of the invention is to provide a station that enables an optimal coordination of the periodic activities of collection and disposal, as a function of the actual quantity of disposed waste.

Another object of the invention is to provide a station offering high accessibility and inclusiveness, the use of which is assured to every user, independently of limiting factors or disability.

Another object of the invention is to provide a station for the separate collection of waste that ensures a high reliability of operation, and which can be used in total safety.

Another object of the invention is to provide a station that offers practical methods for collecting data relating to waste collection.

Another object of the invention is to provide a station that adopts an alternative technical and structural architecture to those of conventional stations.

Another object of the invention is to provide a station that can be easily implemented using elements and materials that are readily available on the market.

Another object of the invention is to provide a station that is of low cost and safely applied.

This aim and these and other objects which will become better apparent hereinafter are all achieved by a station according to claim 1.

Further characteristics and advantages of the invention will become better apparent from the detailed description that follows of a preferred, but not exclusive, embodiment of the station for the separate collection of waste according to the invention, which is illustrated by way of non-limiting example in the accompanying drawings wherein:
Figure 1 is a perspective view of the station according to the invention;
Figures 2 to 5 are cross-sectional views taken along a transverse plane, which schematically show the use of the station in Figure 1.

With particular reference to the figures, a station for the separate collection of waste A is generally designated by the reference numeral 1.

It should be noted from this point onward that in the present discussion the expression "separate collection of waste" takes the same meaning with which it is now commonly widespread and known, i.e. a system of collecting waste A that is (typically but not exclusively) urban, which requires citizens (the users B of the station 1) to perform an initial separation of the various types of waste A.

It should likewise be noted that the station 1 can be placed on the territory, in any position or location (along a road, in a parking facility, on a public square etc.), either public or private, while remaining within the scope of protection claimed herein.

According to the invention, the station 1 comprises first of all at least one container 2 which is provided with doors 3 which are usually maintained in the closed configuration of respective mutually independent inner compartments 4, which are indeed intended for the separate collection of waste A. That means that each compartment 4 will be progressively filled with one and only one category of waste A (paper, plastic, organic, unsorted, pruning offcuts, glass and aluminum etc.), obviously assuming correct use by the users B, and therefore except for abuses or errors of the latter.

In this regard, on each door 3 (or along the container 2) images or pictographs are provided showing the specific type of waste A that can be disposed in the respective compartment 4.

Each compartment 4 can be delimited directly by the walls of a respective container 2; alternatively, and as in the solution in the accompanying figures, the station 1 comprises one or more containers 2 (housings), each one of which accommodates inside it one or more further receptacles 5, which define respective compartments 4. In any case, each compartment 4 is faced by (at least) one respective door 3, provided on a container 2, so as to allow the user B to differentiate the collection by introducing into the respective door 3 only the waste A belonging to the type for which the corresponding compartment 4 is reserved. It should be noted moreover that two or more doors 3 can lead to the same compartment 4.

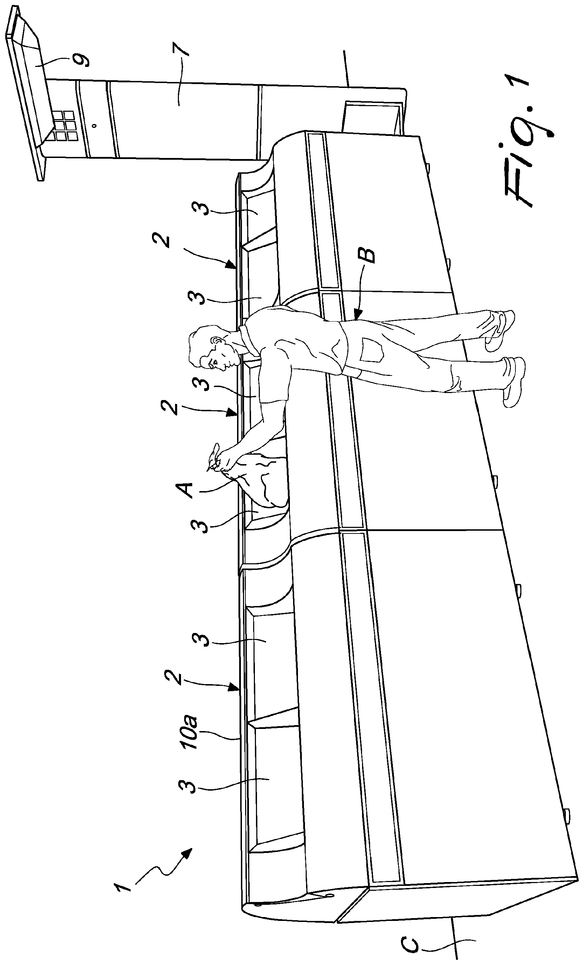

If the station 1 has two or more containers 2, they can be arranged side-by-side (as in Figure 1) and coupled together, or they can assume other configurations, according to the specific requirements.

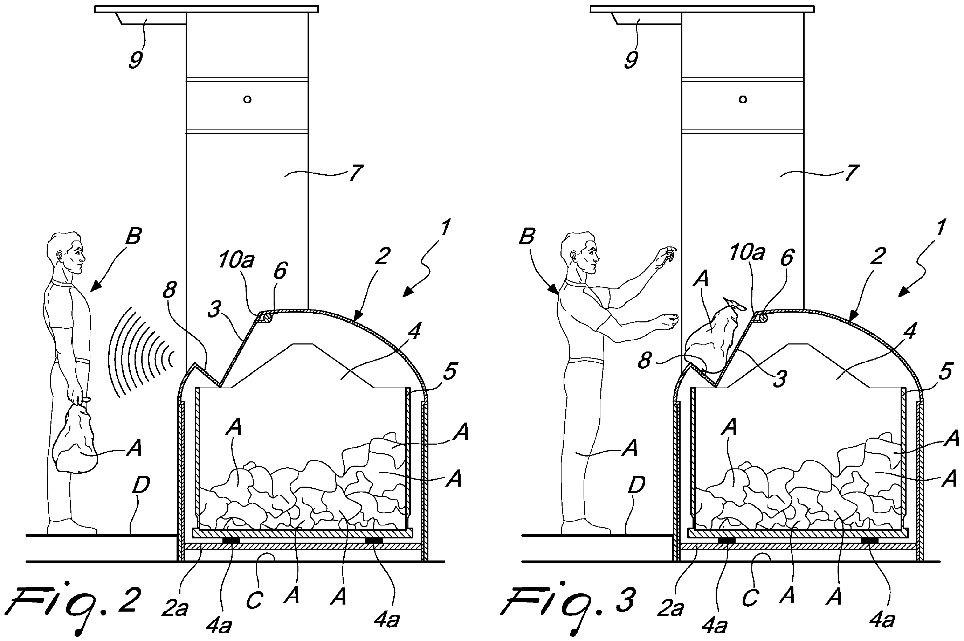

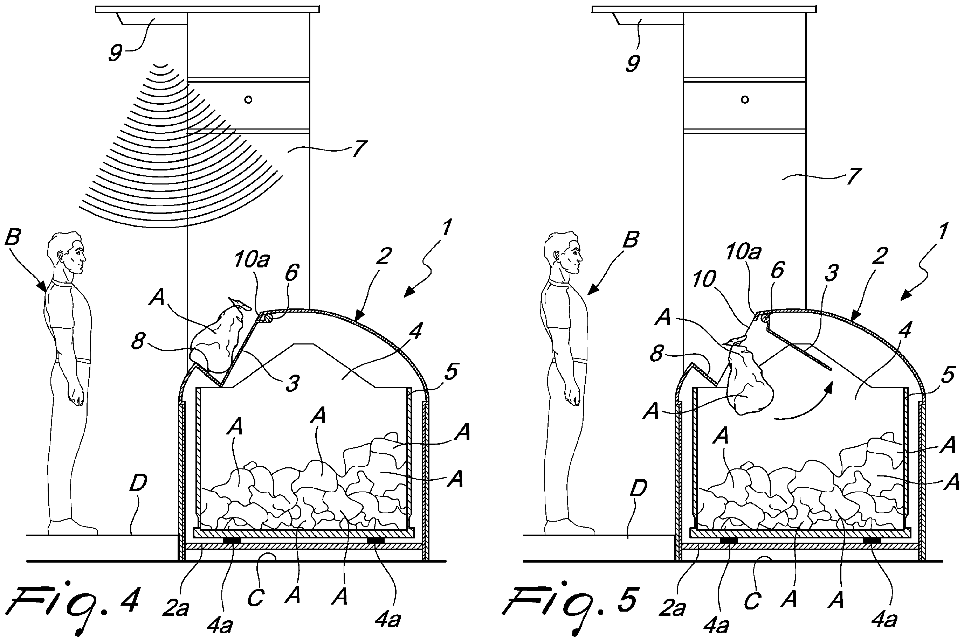

Furthermore, the station 1 according to the invention comprises actuators 6 for the automatic movement of respective doors 3 from the closed configuration (in which the doors 3 are shown for example in Figures 2, 3 and 4) to a temporary open configuration (Figure 5), for free access to the corresponding compartments 4.

The actuators 6 can be of any type, and therefore comprise motors (electric or other type), hydraulic, electric or pneumatic pistons and cylinders, etc.: in any case, they are capable of developing the necessary force to move the door 3 and bring it from the closed configuration to the open configuration, without requiring any effort from the user B. The return to the closed configuration can also be executed through a direct action of the respective actuator 6, or it can occur in another manner, for example by gravity (with a damper to attenuate the return stroke) or by the elastic reaction of a spring. Preferably however, the return also occurs without requiring effort from the user B.

In addition, the station 1 according to the invention comprises sensors for measuring the weight of the waste A that is progressively disposed in each compartment 4. This makes it possible to acquire important information about the progressive filling of the compartments 4 and about the consumption of the users B, as will be better explained below.

In particular, in an embodiment of significant practical interest, which in any case does not limit the application of the invention, each measurement sensor comprises a load cell 4a, which is arranged under a respective compartment 4 and is configured to perform the weighing of the waste A that is progressively disposed. Each cell 4a (one or more for each compartment 4) can for example be fixed to a flat frame 2a that supports the receptacles 5 and which is integral with the container 2.

Furthermore, the station 1 according to the invention comprises user recognition means, which are configured to recognize the user B intending to dispose waste A in at least one of the compartments 4.

The station 1 is therefore capable of recognizing the specific (previously registered) user B who in each instance presents him or herself before the container 2, in order to introduce his or her waste A (a bag, for example, containing waste A of a specific type) into at least one of the compartments 4.

The station 1 according to the invention further comprises an electronic control and management unit, which is configured to receive requests to access at least one compartment 4 and to activate the respective actuator 6, following the successful recognition of a user B by the above mentioned means.

The electronic unit can be a controller, contained for example in a special compartment inside a container 2 or arranged in the immediate vicinity, for example in a column 7 arranged to the side, but in any case functionally connected to the container 2. The possibility is not ruled out however of implementing electronic units in the station 1 which are constituted by other hardware platforms, reprogrammable or otherwise.

So in fact, by interacting with the station 1 the user B can send requests for access (using various methods, some of which will be illustrated below) to the compartment 4 that corresponds to the type of waste A that he or she wishes to dispose; the electronic unit, which has already had the opportunity to verify the identity of the user B, upon receipt of the request activates the corresponding actuator 6 so as to bring the corresponding door 3 to the open configuration. The user B thus has free access to the compartment 4 and can dispose the designated waste A into it, with no effort.

In the event of two or more types of waste A to be disposed by the same user B, he or she can repeat the access request procedure.

It should be noted that the successful recognition is typically but not exclusively made possible by virtue of an advance registration of the user B, which can occur in various different ways, which can be conventional, and by virtue of storing the user B's data in a memory unit which is comprised in the electronic unit, or is associated with the latter.

The successful recognition of the user B (and therefore the clearance to dispose waste A) can be signaled to the user B by the station 1 in various ways, for example by way of a prerecorded voice message, played back by the station 1, and/or a light of various color (green for example) arranged in an appropriate position (for example below each door 3).

In particular, the user recognition means B comprise a first electronic device which is configured to interrogate a second electronic device, which carries information for recognizing a respective user B, according to a contactless information transmission technology, of the type of RFID or NFC technologies or the like.

Therefore, while the first device is mounted on a container 2 (or each container 2 can be provided with a respective first device), the second device is held and carried by the user B who wishes to be recognized through the cited means.

The devices can be of any type, and thus can operate according to one (or more) of the various contactless information transmission technologies already known (or developed in the future).

For example, in a first possible implementation of the invention, the first device is an RFID reader or "interrogator", positioned in the front wall of a container 2 (or of each one of them), or at another point of the container 2 (or even on the post 7, or elsewhere).

Thus, in this case, the first device is configured to interrogate a second device which is constituted by an RFID electronic transponder (or "tag", or "label"), which is constituted by (or incorporated in) a magnetic card, an access badge, a smart card, or the like, which the user B can hold up to the reader in order to be recognized (to effect a form of "log in").

In a second implementation of the invention, which does not exhaust the practical possibilities which in any case remain within the scope of protection claimed herein, the first device operates using NFC technology (it can be a reader or an apparatus also known as an "initiator"), as does the second device (or "target"), which is carried by the user B.

In such case, the devices can be constituted by various elements, and for example the second device can be constituted by (or incorporated in) a smartphone or a tablet (or indeed by a smart card or the like, as in the previous case), provided with special functionalities and/or software application.

In this case too, the recognition (or "log in") occurs preferably but not exclusively by bringing the smartphone close to the first device (reader or the like), which can be arranged at some point on a container 2 or on the station 1.

It should be noted that the use of a smartphone or the like makes it possible to load further content into an associated software application, so as to obtain additional functionality of undoubted interest. For example, guides to using the station 1 in different languages can be made available, thus facilitating the use experience not just for citizens or for people who are familiar with the language of the country where the containers 2 are located, but also for tourists, students and in general anyone who does not live in the country and/or does not speak the language well.

Independently of the use of a smartphone as a second software device, and of the transmission technology adopted, a software application can be associated with the station 1 in order to offer the user B the possibility to keep track of his or her disposals and in general of his or her use of the station 1.

In a first implementation option of the invention, the station 1 comprises respective buttons (or equivalent commands) for actuating corresponding doors 3: each button is configured to send a corresponding access request to the electronic unit. In such context therefore, after having obtained clearance to dispose waste, the user B simply has to press the button corresponding to the door 3 that closes the compartment 4 of interest, in order to obtain temporary access to the latter and be able to conveniently dispose the corresponding waste A therein, with no physical effort.

In a second implementation option that is illustrated in the sequence in Figures 2-5 but without limiting the scope of application of the invention and without therefore exhausting the options which in any case remain within the scope of protection claimed herein, the station 1 comprises sensors (or proximity sensors), associated with respective predefined areas outside the corresponding doors 3. Each sensor (which can be of any type, including conventional) is configured to automatically identify the presence of a mass of waste A in the corresponding area and to send the respective request to the electronic unit.

In this case therefore, after having obtained clearance to make a disposal, the user B simply has to bring the waste A close to the sensor (Figure 2), in order for it to be recognized and therefore activate the movement of the door 3 and obtain access to the compartment 4 (Figure 5). There is moreover an inclined plane 8 at the base of each door 3, which is directed toward the respective compartment 4. Thus, the user B can rest the waste A on such inclined plane 8 (Figure 3), leaving the latter to roll or in any case fall by gravity into the compartment 4, thereby further reducing the effort required of him or her.

It should be noted that an improved version is envisaged of the station 1, in which a single detection apparatus is capable of distinguishing special codes or electronic tags carried on bags of waste A, which identify different types of waste A. Thus, the user B is relieved of the task of identifying the correct door 3, and simply needs to stand in front of the detection apparatus in order to allow the electronic unit to activate the door 3 corresponding to the most appropriate compartment 4 in each instance.

Usefully, the station 1 comprises a system for measuring the volume of the waste A that is progressively disposed in each compartment 4.

In particular, while not ruling out other practical embodiments, the system for measuring volume comprises at least one video camera 9 (or other viewing apparatus) which is oriented toward respective zones outside and adjacent to corresponding doors 3. Such zones can for example coincide with the previously-mentioned inclined planes 8, with the space above them, or with the predefined areas affected by the field of action of the previously-mentioned sensors (the function of the sensor described previously can be integrated in the system for measuring volume, or in any case in the video camera 9). If the zone coincides substantially with the inclined plane 8, it is sufficient to simply place the waste A on the latter (this is necessary in any case in order to dispose it into the compartment 4) in order to allow the measurement of the volume.

The possibility exists that the system for measuring volume comprises a single video camera 9 or a larger number of them, for example using one for each door 3.

Furthermore, the system for measuring volume comprises a respective computer program to calculate the volume of the waste A that is progressively placed in the aforementioned zones and detected by the video camera 9. Such computer program can for example be configured to operate together with the use of bags of a predefined shape, which are easier to recognize and compute by conventional computer programs, but the possibility is not ruled out of adopting different solutions, using computer programs that are capable of calculating the volume of waste A presented in any form.

It should be noted that the methods illustrated above of calculating the volume do not require the user B to remain or wait for any length of time, thus rendering the calculation dynamic (it occurs during the disposal, without the user halting, in the instant shown in Figure 4).

Preferably (but not exclusively), the images obtained by the video camera(s) 9 and processed by the aforementioned computer program will be rendered anonymous, using low resolution or specific applications to render the users B and/or other persons present in the vicinity unrecognizable, so protecting their privacy.

It is also possible that the system for measuring volume (which preferably will be integrated in the electronic unit or connected to it) could keep a photograph (low-resolution or otherwise) of the users B and of any other persons who may be present in the field of view at each disposal. Again, the photograph can be conveniently processed in order to ensure the privacy of the various persons involved.

Usefully, each door 3 is arranged so as to close a port 10 for access to the respective compartment 4 which is situated, with its top 10a, at a height less than or equal to (not greater than) 160 cm above the supporting surface C of the container 2.

The supporting surface C of the container 2 usually coincides with the road or the paving surface of the place where the station 1 according to the invention is located. Such implementation choice proves extremely useful when, as happens in an application of significant practical interest, the station 1 and its containers 2 in particular are intended to be placed proximate to a sidewalk D, on the side of a road or in a stall of a vehicle parking facility or the like.

In fact, when the container 2 is arranged proximate to a sidewalk D, the container 2 is oriented so as to direct each door 3 toward the sidewalk D. Thus, improved safety conditions are achieved for the users B, who are not forced to occupy areas that are potentially affected by the transit of vehicles while they dispose the waste A in the compartments 4.

Furthermore, by arranging the top 10a of the port 10 at the above mentioned height, and taking account that a sidewalk D typically has a maximum height of 15 cm, then with respect to the latter the door 3 and the port 10 are located at most at a height of 145 centimeters. Such height enables easy use even by users B with motor disabilities who use wheelchairs. Moreover, precisely in order to facilitate the latter category of users, preferably the station 1 will be installed at sidewalks D that are accessible with a ramp (and/or with one or more stairways in order to increase accessibility for users B with other physical disabilities: hemiplegics, individuals with mechanical or electronic prostheses etc.).

It should likewise be noted that by giving the containers 2 a reduced height, and for example not exceeding 160 cm, an additional benefit is obtained: the visual impact of the station 1 is limited, and certainly less than that of conventional recycling points, with evident satisfaction of the users B and of anyone who lives or passes in the vicinity.

Advantageously, in an embodiment of significant practical interest the container 2 (or each container 2) has at least one base dimension less than or equal to 140 cm.

Such implementation choice is found to be of most interest when the station 1 is located in a stall of a parking facility, at the side of the roadway, and it is not possible to orient the container 2 with the doors 3 directed toward the sidewalk D. It should be noted in fact that the stalls have a typical width of 2 meters: the container 2 can thus occupy 140 cm at most, leaving a sort of lane of 60 cm available to the user B, inside the stall and outside the roadway, in which the user B can therefore operate in safety.

Advantageously, the electronic unit comprises at least one transceiver module which is configured to establish a communication with a remote data bank and/or a remote data processing center, so as to be able to remotely send at least the data detected by the sensors for measuring weight. More generally, the transceiver module (which can make use of the internet or adopt different transmission methods) can be configured to remotely send any data item acquired by the electronic unit and by other electronic components associated with the latter or in any case comprised in the station 1. Such data (weight and/or volume of the waste A, number of accesses for each user B, photographs and video footage etc.) can be sent for example to the authority that manages separate waste collection, or to any other designated subject, optionally providing the latter with a suitable computer platform that offers the possibility of displaying the data, including in aggregate form, and to analyze them according to various methods.

Up to this point, in the station 1 we have described the containers 2 (and the column 7 that can optionally be present); it must be emphasized that the station 1 according to the invention can be integrated with further components and apparatuses, which are useful to offer other advantageous functionalities.

For example, in addition or as an alternative to the column 7, the station 1 can comprise a platform shelter, preferably but not exclusively of dimensions such that it can be installed in a stall for parking automobiles (or a multiple of such stalls).

Such platform shelter can be provided with modular and customizable instruments and components according to requirements, in order to offer services of various types. By way of non-limiting example, these include: electric charging of telephones, smartphones and similar portable electronic apparatuses, electric recharging of electric bicycles, scooters and automobiles, of electric wheelchairs and/or of the corresponding motors, WiFi and/or 5G hotspots, smart-meter data concentrators, other Information Communication Technology services, benches and/or seats for waiting (for example if there is a public transport stop nearby), video surveillance of the adjacent areas, production of renewable energy with photovoltaic covering surfaces (for example with an additional storage cell, to also ensure the aforementioned electric recharging services), environmental quality analysis (quality of air and/or acoustic quality for example), potable water kiosks, lockers for the delivery and return of packages.

It should be further noted that the platform shelter, and incidentally the containers 2 and the station 1 in general, can be installed without requiring foundations (by virtue of suitably dimensioned ballast and in general a design inspired by simple principles of freestanding installations) and can be controlled remotely, for the ordinary and extraordinary management (alarms, malfunctions etc.).

By virtue of the platform shelter, the station 1 thus responds to the growing demand for the multi-functionality of urban places and spaces.

Operation of the station for the separate waste collection according to the invention is already clear from the foregoing explanation.

It should be noted however that the station 1 offers practical and substantially automatic methods of interaction for the users B, of whom effectively no physical effort is required in order to dispose waste A (following the logic of separate waste collection) in the compartments 4 accommodated in containers 2 which are usually kept closed.

In more detail, the user B simply needs to place himself or herself in front of the user recognition means, in order to activate them (operating preferably according to a technology RFID, NFC, or the like), and be recognized (execute the log-in). The recognition enables the movement of the various doors 3 placed to close the corresponding compartments 4, which occurs automatically, without requiring any physical effort from the user B, by virtue of the actuators 6. More precisely, the electronic unit responsible for moving the doors 3 activates only the actuator 6 (or actuators 6) corresponding to the door 3 placed to close the compartment 4 for which it has received an access request. Such request, which determines the temporary condition of free access to the compartment 4, can occur in various ways, already explained, but in any case in a very practical and easy manner (and preferably by approaching the door 3 of interest, so as to activate the corresponding sensor).

So in fact, in the station 1 the containers 2 are usually closed and the disposal of waste A is possible with two simple operations, without even needing to touch the containers 2 or other components: log-in and disposal (for which it can be sufficient to simply place the waste A on the inclined plane 8 or in any case introduce it into the port 10). This ensures practical methods of separate collection and management of waste A.

At the same time, with each disposal the sensors for measuring weight acquire the data corresponding to the weight of each bag of waste A disposed in each compartment 4 by a respective user B.

Such information, optionally supplemented by information about the volume of the waste A, obtained via the respective system for measuring volume, makes it possible to obtain important information about the progressive filling of the compartments 4 and about the consumption of users B. On the one hand in fact, each user B can have maximum flexibility of disposal because of the fact that he or she can use the station 1 to dispose of any amount of waste A without needing to reach or keep to any limits or targets, as happens with conventional solutions and with the corresponding methods of accounting for volume.

From the point of view of authorities however, or of whoever manages the station 1 and the separate waste collection, the data obtained make it possible to know with certainty, at any time, the percentage-full status for each compartment 4. This ensures maximum consistency of management between the service for collecting and the service for disposing the waste A and/or an optimal coordination of the periodic activities of collection and disposal, as a function of the actual quantity of disposed waste A.

Furthermore, each user B can be attributed the exact weight (and/or volume) disposed, and not a count of disposals associated with a theoretical volume: this facilitates estimates and future forecasts, and also makes it possible to detect any anomalies and potentially improper conduct.

The practical methods of log-in and disposal of waste A assure full usability of the station 1 for each user B, independently of limiting factors or disabilities. This in fact is first of all due to the peculiar and innovative choice to automate the opening of the doors 3, and to the possibility to command such activity simply by approaching the recognition means and the compartments 4 of interest (with no effort being required and in particular without having to manually activate levers, pedals or similar instruments in order to open and close the doors 3).

The station 1 according to the invention is therefore highly accessible and inclusive, and in this context the choice to keep down the height of the containers 2 is of undoubted interest in that, as has been seen, it enables an ease of use for users B who use wheelchairs.

Maximum usability, and conditions of high accessibility and inclusiveness, are further increased by the possibility (envisaged for the station 1) of having elements in relief and/or pictographs on the surfaces, to direct the partially sighted or those with cognitive disabilities to the correct position of the user recognition means, to communicate the type of waste A, to illustrate the actions to be carried out in order to dispose waste and the points for provision of other services (if present). For blind or partially sighted users B, and users B who use a walking stick, it is likewise envisaged to use tactile/plantar areas to indicate the various positions of interest (including in particular the various doors 3 and the positions from which the recognition and/or the disposal can be carried out). More generally, the station 1 can be provided with various lighting apparatuses, and for example automatic diffused lighting systems, especially designed to prevent dark areas and/or shadows.

Furthermore, on the containers 2, or in other positions, there can be illuminated and high-contrast colored indications to enable an easier comprehension of the operation status of the station 1 and of the progress of the disposal. Such indications (like the images and pictographs mentioned above) are preferably designed taking into account a suitable angle of vision between user and the station 1 (as a function therefore of the placement chosen for such indications).

Moreover, the possibility also exists that the station 1 is provided with an audio-guide which is activated upon recognizing the user B, in order to assist the partially sighted, the elderly, and/or the newly literate step-by-step.

Furthermore, benches and/or seats if present can be chosen to be modular, and of shape and dimensions such as to allow use by persons with motor disabilities.

The station 1 can be used in total safety, since preferably the doors 3 will be directed toward the sidewalk D and, even if this should not be possible, the width of the containers 2 is small, so as to maintain sufficient space for the users B in the stall of a parking facility, without requiring them to use the roadway (thus guarding against any hazards).

By virtue of the transceiver module, the station 1 ensures practical methods for collecting data relating to the collection of waste A. For example, all the data acquired from the station 1 according to the invention can be transmitted via the above mentioned module in order to be processed in the cloud and all the information can be displayed in a management software application or system which is integrated in a dashboard or on a digital platform (such as "dashboard", for example).

The invention, thus conceived, is susceptible of numerous modifications and variations, all of which are within the scope of the appended claims. Moreover, all the details may be substituted by other, technically equivalent elements.

In the embodiments illustrated, individual characteristics shown in relation to specific examples may in reality be substituted with other, different characteristics, existing in other embodiments.

In practice, the materials employed, as well as the dimensions, may be any according to requirements and to the state of the art.

The disclosures in Italian Utility Model Application No. 202018000005107 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs

## Claims

1. A station for the separate collection of waste (A), which is **characterized in that** it comprises at least:
- a container (2) provided with doors (3) which are usually maintained in the closed configuration of respective mutually independent inner compartments (4) which are intended for the separate collection of waste (A),
- actuators (6) for the automatic movement of respective said doors (3) from said closed configuration to a temporary open configuration, for free access to the corresponding said compartments (4),
- sensors for measuring the weight of the waste (A) that is progressively disposed in each one of said compartments (4),
- user recognition means, which are configured to recognize the user (B) intending to dispose waste (A) in at least one of said compartments (4),
- an electronic control and management unit, which is configured to receive access to at least one of said compartments (4) and to activate the respective said actuator (6), following the successful recognition of a user (B) by said means.

2. The station according to claim 1, **characterized in that** said means comprise a first electronic device which is configured to interrogate a second electronic device, carrying information for recognizing a respective user (B), according to a contactless information transmission technology, of the type of RFID or NFC technologies or the like.

3. The station according to claim 1 or 2, **characterized in that** each one of said sensors for measuring weight comprises a load cell (4a), which is arranged under a respective said compartment (4) and is configured to weigh the waste (A) that is progressively disposed.

4. The station according to one or more of the preceding claims, **characterized in that** it comprises respective buttons for actuating corresponding said doors (3), each one of said buttons being configured to send a corresponding access request to said electronic unit.

5. The station according to one or more of claims 1-3, **characterized in that** it comprises sensors, associated with respective predefined areas outside corresponding said doors (3), each one of said sensors being configured to automatically identify the presence of a mass of waste (A) in the corresponding said area and send the respective said request to said electronic unit.

6. The station according to one or more of the preceding claims, **characterized in that** it comprises a system for measuring the volume of the waste (A) that is progressively disposed in each one of said compartments (4).

7. The station according to claim 6, **characterized in that** said system for measuring volume comprises at least one video camera (9) which is oriented toward respective zones outside and adjacent to corresponding said doors (3), and a respective software program for calculating the volume of the waste (A) that is progressively deposited in said zones and detected by said video camera (9).

8. The station according to one or more of the preceding claims, **characterized in that** each one of said doors (3) is arranged so as to close a port (10) for access to the respective said compartment (4) which is situated, with its top (10a), at a height less than or equal to 160 cm above the supporting surface (C) of said container (2).

9. The station according to one or more of the preceding claims, **characterized in that** said container (2) has at least one base dimension less than or equal to 140 cm.

10. The station according to one or more of the preceding claims, **characterized in that** said electronic unit comprises at least one transceiver module which is configured to establish a communication with a remote data bank and/or a remote data processing center, at least for distance sending of the data detected by said sensors for measuring weight.
